# EUROPÄISCHE PATENTANMELDUNG

(11) **EP 2 088 296 A2**
(43) Veröffentlichungstag der Anmeldung: **12.08.2009**
(21) Anmeldenummer: 09000689.1
(22) Anmeldetag: 20.01.2009
(51) Int. Cl.: F01N 9/00, F02D 9/06, F02D 41/02, F02D 41/12, F02D 41/40

(54) **Verfahren zur Regenerierung eines im Abgasstrang eines Fahrzeug-Dieselmotors angeordneten Partikelfilters**

(30) Priorität: 04.02.2008 AT 1662008
(71) Anmelder: MAN Nutzfahrzeuge Österreich AG, 4400 Steyr (AT)
(72) Erfinder: Richter, Klaus, 4400 Steyr (AT); Raab, Gottfried, 4320 Perg (AT)

(57) **Zusammenfassung**

Die Erfindung betrifft ein Verfahren zur Regenerierung eines im Abgasstrang (4, 7) eines Fahrzeug-Dieselmotors (1) angeordneten, mit abgeschiedenen Rußpartikeln teilbeladenen Partikelfilters (8). Der Dieselmotor ist mit einer Motorbremseinrichtung, zu der auch eine im Abgasstrang stromauf des Partikelfliters (8) angeordnete Bremsklappe (19) gehört, und mit einer Kraftstoffeinspritzvorrichtung mit je Zylinder (2) einem Einspritzventil (16) ausgestattet. Das erfindungsgemäße Verfahren zeichnet sich dadurch aus, dass die Regenerierung des Partikelfilters (8) nach Einleiten einer Motorbremsphase gestartet und dann innerhalb dieser durchgeführt wird, wie folgt: Es wird eine bestimmte Menge von Dieselkraftstoff in die Zylinder (2) des staudruckgebremsten Dieselmotors (1) zu Zeitpunkten jeweils nennenswert nach dem oberen Kolbentotpunkt (OT) eingespritzt. Außerdem wird die Bremsklappe (19) für das aufgestaute Heißgas-Gemisch aus einer bestimmten Menge unverbrannten verdampften Kraftstoffs und einer bestimmten Menge von im Motorbremsbetrieb hochverdichteter Luft teilpassierbar oder teilumgehbar gemacht. Dieses die Bremsklappe (19) passierende Heißgas-Gemisch gelangt dann stromab in den Partikelfilter (8), wo es als hocheffizientes Oxidationsmittel wirkend eine Initialzündung des im Partikelfilter (8) abgeschiedenen Rußes bewirkt und anschließend dessen beschleunigte Oxidation unterstützt.

## Beschreibung

Die Erfindung betrifft gemäß dem Oberbegriff des Anspruchs 1 ein Verfahren zur Regenerierung eines im Abgasstrang eines Fahrzeug-Dieselmotors angeordneten, mit abgeschiedenen Rußpartikeln teilbeladenen Partikelfilters, wobei der Dieselmotor mit einer Motorstaubremseinrichtung, zu der auch eine im Abgasstrang stromauf der Regenerierungsstelle angeordnete Bremsklappe gehört, und mit einer Kraftstoffeinspritzvorrichtung mit je Zylinder einem Einspritzventil ausgestattet ist.

### Stand der Technik

In Nutzfahrzeugen mit Dieselmotoren sind in deren Abgassträngen zur Erfüllung der gesetzgeberischen Abgasvorschriften Partikelfilter vorgesehen, denen Oxidationskatalysatoren zur NOₓ-Anreicherung der Abgase vorgeschaltet und gegebenenfalls SCR-Katalysatoren nachgeschaltet sein können. Diese Partikelfilter werden durch den aus dem Abgas ausgeschiedenen Ruß mehr oder weniger stark beladen. Bei ausreichend hohen Abgastemperaturen (> 350°C) wird der Ruß nahezu kontinuierlich oxidiert. Bei nicht hinreichend hohen Abgastemperaturen ist es bekannt, die thermische Regeneration durch Einspritzung einer bestimmten Menge Kraftstoff in den Abgasstrang vor einem zu regenerierenden Partikelfilter zu initiieren und zu unterstützen. Die Zuteilung von Dieselkraftstoff als HC-Träger erfolgt dabei durch eigens hierfür vorgesehene Kraftstoffdosiereinrichtungen. Die bei der Oxidation der verdampften Kohlenwasserstoffe (HC) im Abgasstrang freigesetzte Wärme erhitzt den Partikelfilter auf die Zündtemperatur des gesammelten Rußes. Eine in der Regel sehr aufwändige Regel- und Steuerelektronik sorgt für die passenden Startbedingungen für eine solche Regeneration. Diese bekannte Art der Initiierung von Regenerationen rußbeladener Partikelfilter hat in der Regel insbesondere bei stark instationär betriebenen Fahrzeugen wie Linienbussen und Verteiler-Lastkraftwagen einen vergleichsweise hohen Kraftstoffmehrverbrauch zur Folge, der sich aufgrund steigender Kraftstoffpreise erheblich in den Fahrzeugbetriebskosten niederschlägt.

Es ist daher Aufgabe der Erfindung, ein Regenerierungsverfahren der gattungsgemäßen Art in Verbindung mit einem Dieselmotor und einem Abgasstrang der gattungsgemäßen Art so zu verbessern, dass dieses mit weniger Bau-/Geräteaufwand als bisher darstellbar ist und außerdem bei dessen Anwendung ein geringerer Kraftstoffmehrverbrauch als bei den erwähnten bekannten Regenerierungsverfahren auftritt.

Diese Aufgabe ist erfindungsgemäß durch das im Anspruch 1 angegebene Regenerierungsverfahren gelöst.

Vorteilhafte Details und Durchführungsvarianten des erfindungsgemäßen Verfahrens sind in den Unteransprüchen beansprucht.

Das erfindungsgemäße Verfahren zeichnet sich dadurch aus, dass es im Gegensatz zu herkömmlichen Verfahren eine Regenerierung eines mit Russpartikeln teilbeladenen Partikelfilters nur während Motorbremsbetriebsphasen zulässt. Das heißt, das erfindungsgemäße Verfahren ist nur an und in Verbindung mit Dieselmotoren anwendbar, die über eine Motorstaubremseinrichtung verfügen, zu der auch eine im Abgasstrang stromauf des Partikelfilters und strömungsmäßig vor oder nach der Turbine eines Abgasturboladers angeordnete Bremsklappe gehört. Letztere befindet sich normalerweise in Durchlass-Stellung, ist aber während einer normalen Motorbremsphase in ihre Absperrposition umgeschaltet, wodurch das im abgesperrten Bereich des Abgastrakts aufgestaute Gas in den einzelnen Motorzylindern bremsleistungserzeugend mit dem Kolben zusammenwirkt. Um aber den Motor beim Bremsen nicht abzuwürgen, wird die Bremsklappe nicht vollständig geschlossen oder ein im Bereich derselben ein diese umgehender kleiner Bypasskanal durch ein Ventil freigegeben, so dass ein geringer Anteil des Gases aus dem aufgestauten Bereich in den nachfolgenden Abschnitt des Abgastraktes abströmen kann.

Die Erfinder haben nun erkannt, dass sich gerade die vorerwähnten spezifischen Verhältnisse während einer Motorbremsphase in Verbindung mit der motorinternen Kraftstoffeinspritzvorrichtung besonders gut für die Regenerierung eines mit Rußpartikeln teilbeladenen Partikelfilters anwenden lassen. Die erfindungsgemäße Art der Regenerierung ist unter Verwendung der vorhandenen technischen Einrichtungen am Motor realisierbar, das heißt, es ist praktisch kein zusätzlicher Bau- und Geräteaufwand, sondern lediglich nur eine höhere Regelungs- und Steuerungstiefe zur Abdeckung auch der Regenerierungsfunktion mit den vorhandenen Einrichtungen notwendig. Generell wird demnach gemäß der Erfindung eine Regenerierung eines mit Rußpartikeln teilbeladenen Partikelfilters immer nur während Motorbremsphasen durchgeführt, nach dem Einleiten einer Motorbremsphase gestartet und anschließend während der weiteren Motorbremsphase durchgeführt. In solchen Motorbremsphasen ist die Drehzahl des Dieselmotors auf einen nennenswert unterhalb der Nenndrehzahl liegenden unteren bis mittleren Drehzahlbereich heruntergebremst und es wird eine bestimmte Menge von Dieselkraftstoff über die motoreigenen Einspritzventile in die Zylinder des staudruckgebremsten Dieselmotors eingespritzt, und zwar zu einem Zeitpunkt, der nennenswert nach dem oberen Kolbentotpunkt (OT) liegt. Außerdem wird durch steuerungstechnische Maßnahmen die Bremsklappe teilpassierbar oder teilumgehbar gemacht für das dann im Staubereich des abgesperrten Abgastraktes vorhandene, aus einer bestimmten Menge unverbrannten Kraftstoffs und einer im Motorbremsbetrieb hochverdichteten Luft bestehende Heißgas-Gemisch. Dieses die Bremsklappe passierte Heißgas-Gemisch wirkt während der Motorbremsphasen bei der Regenerierung des teilrußbeladenen Partikelfilters als hocheffizientes Oxidationsmittel, welches zu Beginn einer Regenerierungsphase eine Initialzündung des Rußes bewirkt und anschließend dessen beschleunigte Oxidation/Verbrennung unterstützt.

Da jede Regeneration des Partikelfilters nach der erfindungsgemäßen Methode einen gewissen Kraftstoffverbrauch verursacht, ist es zweckmäßig, vor Initiierung einer Regenerierungsphase die Notwendigkeit der Regenerierung des Partikelfilters zu hinterfragen bzw. festzustellen. Dies geschieht beispielsweise durch Erfassung von für die Rußpartikelbeladung des Partikelfilters repräsentativen Druckwerten wie dem Abgasgegendruck im Abgasstrang. Außerdem kann auch der Grad der Rußbeladung als Wertebereich vorgeben sein, mit der Folge, dass dann, wenn ein Rußbeladungswert innerhalb dieses Wertebereiches liegt, abhängig von der Lage eine Regenerierung sofort oder zeitlich versetzt in Gang gesetzt wird. In diesem Zusammenhang ist für die Auswertung der erfassten, für die Rußpartikelbeladung repräsentativen Druckwerte ein bestimmter Sollwertbereich vorgegeben. Durch Vergleich der übermittelten Druck-Istwerte mit den Druckwerten des Sollbereiches kann dann je nach Lage der Druck-Istwerte in diesem Bereich festgelegt werden, ob die Regenerierung zu diesem Zeitpunkt notwendig ist oder erst zu einem späteren Zeitpunkt gestartet werden kann. Auf diese Weise lässt sich ein unnötiger Kraftstoffverbrauch vermeiden.

Die Menge an Kraftstoff für die Regenerierung des Partikelfilters lässt sich auch dadurch begrenzen, dass sie innerhalb einer Regenerationsphase abhängig von erfassten Temperatur-Istwerten des Partikelfilters eingestellt wird, und zwar bei niedrigen Partikelfilter-Temperaturen auf vergleichsweise hohe Einspritzmengen und bei höheren Partikelfilter-Temperaturen auf niedrigere Einspritzmengen. Dabei kann der Beginn einer Kraftstoffeinspritzung oder einer Kraftstoffeinspritzsequenz steuerungstechnisch in einem Bereich zwischen minimal nach OT, z. B. 5° KW nach OT, und maximal nach OT, z. B. 120° KW nach OT liegen und variabel auch im Hinblick auf die einzuspritzende Kraftstoffmenge entsprechend angepasst eingestellt werden.

Zur weiteren Begrenzung des Kraftstoffverbrauchs für die Partikelfilter-Regenerierung ist es auch zweckmäßig, innerhalb einer Regenerierungsphase den aktuellen Regenerierungszustand des Partikelfilters festzustellen. Dies kann ebenfalls durch Erfassung von hierfür aussagekräftigen Betriebswerten wie dem Abgasgegendruck im Abgasstrang erfolgen. Die Regenerierungsphase wird beendet, sobald ein für einen hinreichenden Regenerierungsgrad repräsentativer Betriebswert festgestellt ist.

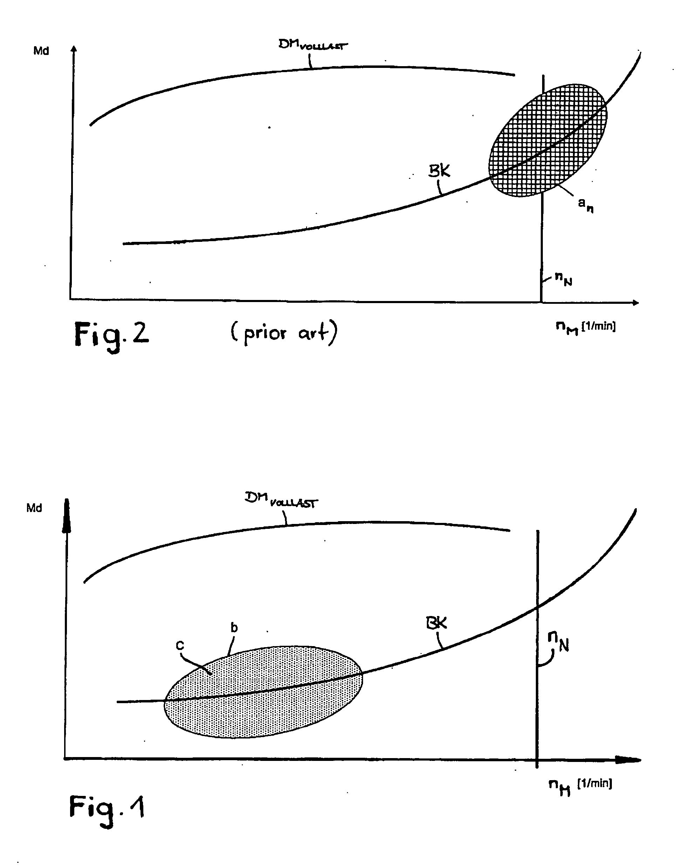

Rein der Form halber sei an dieser Stelle darauf hingewiesen, dass es bei bestimmten, in MAN-Lastkraftwagen oder -Omnibussen eingebauten Dieselmotoren bekannt ist, während einer Motorbremsphase dann, wenn sich die Motorbremsdrehzahl im Bereich der Nenndrehzahl befindet und die komprimierte Luft extrem hohe Temperaturen annimmt, zur Vermeidung einer Verkokung der Einspritzdüsenbohrungen aufgrund einer Überhitzung der in die Brennräume hineinragenden Einspritzdüsenköpfe zu deren Kühlung eine kurzzeitige Einspritzung von Kraftstoff in die Zylinder erfolgt. Siehe hierzu das Diagramm gemäß Fig. 2, das die diesbezüglichen Verhältnisse abbildet. In dem Last-Drehzahl-Diagramm gemäß Fig. 2 ist mit DM_{Volllast} die bei Volllast des Dieselmotors gegebene Drehmomentlinie, mit BK die im Bremsbetrieb des Dieselmotors sich ergebende Bremsleistungslinie und mit an das Kraftstoffeinspritz-Kennfeld für die Düsenkühlung während des Motorbremsbetriebes bezeichnet. Wie man sieht, liegt das düsenkühlende Einspritzkennfeld aₙ im Bereich der Nenndrehzahl n_{M} des Dieselmotors. Die Nenndrehzahllinie ist mit n_{N} bezeichnet. Wenn sich die Bremsdrehzahl des Dieselmotors in diesem hitzekritischen Drehzahlbereich befindet, erfolgt eine kurzzeitige einspritzdüsenkühlende Kraftstoffeinspritzung. Diese der Einspritzdüsenkühlung dienende Kraftstoffeinspritzung hat jedoch keinen Bezug zu einem Regenerierungsverfahren für einen Partikelfilter der erfindungsgemäßen Art.

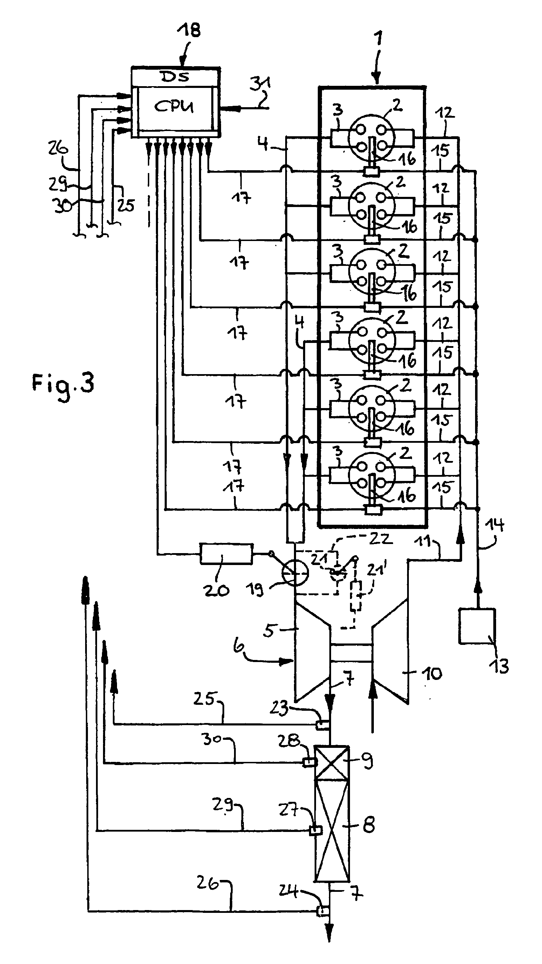

Im Folgenden ist anhand des Diagramms von Fig. 1 und einer Prinzipskizze eines Dieselmotors gemäß Fig. 3 das erfindungsgemäße Verfahren noch näher erläutert.

In Fig. 3 ist schematisch ein in einem Fahrzeug wie Lastkraftwagen, Omnibus oder sonstigem Nutzfahrzeug eingebauter Dieselmotor 1 dargestellt. Dessen hier sechs Zylinder sind jeweils mit 2 bezeichnet. Jeder dieser Zylinder 2 weist zwei Auslassventile auf, die über je einen Auslasskanal 3 mit einem abgassammelnden Krümmer 4 kommunizieren. Im dargestellten Fall sind jeweils drei Zylinder 2 gruppenweise an einen Krümmer 4 angeschlossen. Beide Krümmer 4 führen zur Turbine 5 eines Abgasturboladers 6 hin und sind Bestandteile des Abgasstrangs des Dieselmotors 1, der sich ausgangs der Turbine 5 mit einem Abschnitt 7 festsetzt, in den ein Partikelfilter 8 eingebaut ist. Im dargestellten Beispiel ist letzterem strömungsmäßig ein Oxidationskatalysator 9 vorgeordnet. Dieser sorgt für eine signifikante Erhöhung des NO₂-Anteils im Abgas, während der Partikelfilter 8 primär dazu dient, die im Abgas enthaltenen Rußpartikel abzuscheiden/herauszufiltern und zu oxidieren.

Mit der Turbine 5 des Abgasturboladers 6 ist ein Verdichter 10 gekoppelt, der Ladeluft verdichtet und über eine Ladeluftleitung 11 sowie von dieser abzweigende Einlasskanäle 11 den Zylindern 2 zuführt, die die Ladeluft gesteuert über je zwei Einlassventile zugeteilt bekommen.

Der Dieselmotor 1 ist mit einer Common Rail-Einspritzvorrichtung ausgestattet, die in ihren Hauptorganen aus einer Hochdruckförderpumpe 13, der Hochdrucksammelleitung/Rail 14 und sechs, über je eine Hochdruckanschlussleitung 15 an letzterer angeschlossenen Einspritzventilen 16 besteht. Die Einspritzventile 16 weisen zu ihrer Betätigung elektromagnetisch-elektronische Steuerköpfe auf, die ihre Einspritzsteuerbefehle über elektrische Steuerleitungen 17 von einer rechnergestützt arbeitenden elektronischen Steuereinheit 18 erhalten. Diese weist als Hauptteile eine CPU (Central Processing Unit), Datenspeicher DS sowie Input- und Output-Interfaceeinrichtungen auf.

Der Dieselmotor 1 ist des Weiteren mit einer motorinternen Staudruck-Motorbremseinrichtung ausgestattet, z. B. einer solchen, die in Fachkreisen als MAN-EVB^{®} bekannt und an MAN-Motoren schon millionenfach angewandt ist. Zu dieser Motorbremseinrichtung gehört eine Bremsklappe 19, die im Abgasstrang des Dieselmotors entweder vor oder nach der Turbine 5 des Abgasturboladers 6 angeordnet sein kann. Im Beispiel gemäß Fig. 3 ist die Bremsklappe 19 unmittelbar vor dem Eingang der Turbine 5 zwischen dieser und den Krümmern 4 eingebaut. Sie ist durch einen Stellmotor 20, der seine Steuerbefehle vorzugsweise ebenfalls von der Steuereinheit 18 erhält, aus ihrer Normalstellung (= Volldurchlass) in eine Absperrposition (= Motorbremsbetriebsstellung) verstellbar. Diese Absperrposition kann so sein, dass das Gas im abgesperrten Abschnitt des Abgasstrangs, also im Bereich der Krümmer 4 zwar aufgestaut, aber trotzdem ein geringer Abfluss von aufgestautem Gas zugelassen wird. Alternativ besteht die Möglichkeit, mit der Bremsklappe 19 den Abgasstrang dicht abzusperren, einen geringen Abfluss des aufgestauten Gases aber über eine durch ein Ventil oder Klappe 21 auf- und zusteuerbare Bypass-Leitung 22 zu erlauben. Diese Version ist in Fig. 3 gestrichelt eingezeichnet. Der Stellmotor 21' des Ventils bzw. der Klappe 21 erhält seine Steuerbefehle bevorzugt ebenfalls von der Steuereinheit 18.

Mit 23 und 24 sind strömungsmäßig vor und hinter dem Partikelfilter 8 angeordnete Drucksensoren bezeichnet, mit denen die an der jeweiligen Messstelle im Abgasstrang 7 herrschenden Drücke erfasst und als Druck-Istwerte über Messleitungen 25, 26 an die Steuereinheit 18 gemeldet werden. Mit 27 ist ein die Temperatur im Partikelfilter 8 und mit 28 ein die Temperatur im Oxidationskatalysator 9 erfassender Temperatursensor bezeichnet. Die damit erfassten Temperatur-Istwerte werden über Messleitungen 29, 30 ebenfalls an die Steuereinheit 18 gemeldet.

Nachfolgend ist das erfindungsgemäße Verfahren zur Regeneration des Partikelfilters 8 anhand des Diagramms von Fig. 1 in Verbindung mit einem Dieselmotor 1 der in Fig. 3 dargestellten und vorstehend beschriebenen Art näher erläutert. Dieses Verfahren zeichnet sich dadurch aus, dass eine Regenerierung des mit abgeschiedenen Rußpartikeln teilbeladenen Partikelfilters 8 grundsätzlich nur während des Motorbremsbetriebes stattfinden kann. Im Diagramm gemäß Fig. 1 ist mit M_{d} das Drehmoment und mit n_{M} die Drehzahl des Dieselmotors 1 bezeichnet. Die Nenndrehzahl des Dieselmotors 1 ist im Diagramm durch die Linie n_{M} gekennzeichnet. Die Volllastkurve ist im Diagramm mit DM_{Volllast} bezeichnet. Der während einer Motorbremsung auftretende Verlauf der Motorbremsleistung ist im Diagramm durch die mit BK bezeichnete Kurve eingetragen. Eine Regenerierungsphase für den Partikelfilter 8 wird nach Einleiten einer Motorbremsphase durch den Fahrer des Fahrzeugs gestartet, die Steuereinheit 18 erhält dies über eine Signalleitung 31 eingesteuert und gibt Befehle aus, durch die die Bremsklappe 19 und - soweit vorhanden - das Ventil bzw. Klappe 21 in Motorbremsbetriebsstellung gebracht werden. Seitens der Steuereinheit 18 ist aufgrund der ihr von den Drucksensoren 23, 24 permanent übermittelten oder sukzessive abgefragten Druckwerten der sich daraus ergebende, im Abgasstrang 7 herrschende Abgasgegendruck bekannt.

Dieser schon vor einer Motorbremsphase bekannte, alternativ aber auch erst nach Starten einer Motorbremsphase durch Abfragen der Druckwerte an den Drucksensoren 23, 24 in der Steuereinheit 18 feststellbare Abgasgegendruck ist repräsentativ für den Grad der Rußpartikelbeladung des Partikelfilters 8. Da das erfindungsgemäße Regenerierungsverfahren einen gewissen Kraftstoffverbrauch verursacht, ist es zweckmäßig, vorab die Notwendigkeit einer Regenerierung des Partikelfilters 8 festzustellen, z. B. anhand des erfassten Abgasgegendruckes, und erst abhängig davon, wenn notwendig, das Regenerieren durch die weiteren erfindungsgemäßen Maßnahmen einzuleiten. Im Rahmen dieser Notwendigkeitsabfrage kann für die Auswertung der erfassten, für die Rußpartikelbeladung des Partikelfilters 8 repräsentativen Druckwerte seitens der Steuerelektronik 18 ein bestimmter Sollwert-Bereich vorgegeben sein, wobei durch Vergleich der ermittelten Druck-Istwerte mit den Druckwerten des Sollwertbereiches anhand der Lage der Druck-Istwerte in letzterem in der Steuerelektronik 18 festgelegt ist, ob die Regenerierung des Partikelfilters zu diesem Zeitpunkt der Druckwertfeststellung/Vergleichsmaßnahme notwendig ist oder erst zu einem späteren Zeitpunkt gestartet werden kann. Hierdurch lässt sich der Kraftstoffverbrauch für das Regenerieren begrenzen.

Die Maßnahmen für das Regenerieren werden von der Steuereinheit 18 vorgegeben. Ist ein Motorbremsvorgang eingeleitet und die Notwendigkeit einer Regenerierung des Partikelfilters erkannt, wird die Regenerierung des Partikelfilters gestartet und dann innerhalb dieser Motorbremsphase durchgeführt. Dabei wird über die motoreigenen Einspritzventile 16 eine bestimmte Menge von Dieselkraftstoff in die Zylinder 2 des staudruckgebremsten Dieselmotors zu einem Zeitpunkt jeweils nennenswert nach dem oberen Kolbentotpunkt (OT) eingespritzt. Außerdem wird durch steuerungstechnische Maßnahmen von der Steuereinheit 18 die Bremsklappe 19 für das nun im abgesperrten Teil 4 des Abgasstranges gegebene Heißgas-Gemisch aus einer bestimmten Menge verdampften, unverbrannten Kraftstoffs und einer bestimmten Menge an im Motorbremsbetrieb hochverdichteter Luft teilpassierbar oder teilumgehbar gemacht. Dieses Heißgas-Gemisch gelangt dann stromab in den Partikelfilter 8, in dem es als hocheffiziertes Oxidationsmittel wirkend eine Initialzündung des dort abgeschiedenen Rußes bewirkt und anschließend dessen beschleunigte Oxidation unterstützt.

Im Diagramm gemäß Fig. 1 ist der Bereich der Kraftstoffeinspritzung für die Regenerierung des Partikelfilters 8 durch das Einspritzkennfeld c angegeben. Dessen durch die Begrenzungslinie b angegebene Größe ist durch die Einspritzzeitpunkte und Einspritzmengen während einer Regenerationsphase definiert. Aus dem Diagramm gemäß Fig. 1 wird durch das Einspritzkennfeld c ersichtlich, dass die Regenerierung des Partikelfilters 8 während einer Motorbremsphase innerhalb eines Drehzahlbereiches des heruntergebremsten Dieselmotors 1 erfolgt, der nennenswert unterhalb der Nenndrehzahl n_{M} des Dieselmotors 1, also in dessen unterem bis mittleren Drehzahlbereich liegt. Dabei wird während einer Motorbremsphase innerhalb einer aktivierten Regenerationsphase gesteuert durch die Steuereinrichtung 18 der Beginn der Kraftstoffeinspritzung je Zylinder 2 zeitmäßig in einem Bereich zwischen minimal nach OT, beispielsweise ca. 5° KW nach OT, und maximal nach OT, beispielsweise 120° KW nach OT, und die Menge des einzuspritzenden Kraftstoffs definiert über die Einspritzdauer in Abhängigkeit von dem erfassten Temperatur-Istwert des Partikelfilters 18 festgelegt, und zwar bei niedriger Partikelfilter-Temperatur auf vergleichsweise lange Einspritzdauern mit hohen Einspritzmengen, dagegen bei höherer Partikelfilter-Temperatur auf kürzere Einspritzperioden und niedrigere Einspritzmengen. Es ist auch möglich, eine solche Einspritzperiode in mehrere getaktete Einspritzungen unterteilt durchzuführen.

Es ist zweckmäßig, während einer innerhalb einer Motorbremsphase aktivierten Regenerationsphase den aktuellen Regenerierungsgrad des Partikelfilters 8 festzustellen, um nicht unnötigen Kraftstoffverbrauch zu verursachen. Dies geschieht wiederum durch Erfassung von hierfür aussagefähigen Betriebswerten wie dem Abgasgegendruck im Abgasstrang 7 über die Drucksensoren 23, 24 und deren Auswertung durch die Steuereinheit 18. Die Steuereinheit 18 veranlasst eine Beendigung einer Regenerierungsphase, sobald sie einen für einen hinreichenden Regenerierungsgrad repräsentativen Betriebswert feststellt.

Mit dem erfindungsgemäßen Verfahren wird eine hocheffiziente Regenerierung von Partikelfiltern insbesondere solcher Art erreicht, die in Fahrzeugen eingebaut sind, in denen aufgrund ihrer Einsatzzwecke eine für permanente, selbständig ablaufende Regeneration ausreichend hohe Partikelfiltertemperatur nicht oder nur selten erreicht wird.

## Patentansprüche

1. Verfahren und Regenerierung eines im Abgasstrang (4, 7) eines Fahrzeug-Dieselmotors (1) angeordneten, mit abgeschiedenen Russpartikeln teilbeladenen Partikelfilters (8), wobei der Dieselmotor (1) mit einer Motorbremseinrichtung, zu der auch eine im Abgasstrang (4, 7) stromauf des Partikelfilters (8) angeordnete Bremsklappe (19) gehört, und mit einer Kraftstoffeinspritzvorrichtung (13, 16) mit je Zylinder (2) einem Einspritzventil (16) ausgestattet ist, **dadurch gekennzeichnet, dass** die Regenerierung des Partikelfilters (8) nach dem Einleiten einer Motorbremsphase gestartet und dann innerhalb dieser eine bestimmte Menge von Dieselkraftstoff in die Zylinder (2) des staudruckgebremsten Dieselmotors (1) zu Zeitpunkten jeweils nennenswert nach dem oberen Kolbentotpunkt (OT) eingespritzt und die Bremsklappe (19) durch steuerungstechnische Maßnahmen für ein Heißgas-Gemisch aus einer bestimmten Menge unverbrannten Kraftstoffs und einer bestimmten Menge an im Motorbremsbetrieb hochverdichteter Luft teilpassierbar oder teilumgehbar gemacht wird, welches Heißgas-Gemisch während der Motorbremsbetriebsphasen bei der Regenerierung des teilrußbeladenen Partikelfilters (8) als hocheffizientes Oxidationsmittel wirkend eine Initial-Zündung des im Partikelfilter (8) abgeschiedenen Rußes bewirkt und anschließend dessen beschleunigte Oxidation unterstützt.

2. Verfahren nach Anspruch 1, **dadurch gekennzeichnet, dass** die Regenerierung des Partikelfilters (8) innerhalb einer Motorbremsphase in einem Drehzahlbereich des heruntergebremsten Dieselmotors (1) erfolgt, der nennenswert unterhalb der Nenndrehzahl des Dieselmotors (1) etwa im unteren bis mittleren Drehzahlbereich liegt.

3. Verfahren nach Anspruch 1, **dadurch gekennzeichnet, dass** die Notwendigkeit einer Regenerierung des Partikelfilters (8) vor oder unmittelbar nach der Einleitung einer Motorbremsphase festgestellt wird, und zwar durch Erfassung von für die Rußpartikelbeladung des Partikelfilters (8) repräsentativen Druckwerten wie dem Abgasgegendruck im Abgasstrang (7) durch entsprechende Drucksensoren (23, 24).

4. Verfahren nach Anspruch 3, **dadurch gekennzeichnet, dass** für die Auswertung der erfassten, für die Russpartikelbeladung repräsentativen Druckwerte ein bestimmter Sollwertbereich vorgegeben ist, und dass durch Vergleich der übermittelten Druck-Istwerte mit den Druckwerten des Sollwertbereiches anhand der Lage der Druck-Istwerte in letzterem festgestellt wird, ob die Regenerierung des Partikelfilters (8) zu diesem Zeitpunkt der Druck-Istwert-Feststellung notwendig ist oder erst zu einem späteren Zeitpunkt gestartet werden kann.

5. Verfahren nach Anspruch 1, **dadurch gekennzeichnet, dass** während einer Motorbremsphase und innerhalb einer aktivierten Regenerationsphase der Beginn der Kraftstoffeinspritzung zeitmäßig in einem Bereich zwischen minimal nach OT und maximal nach OT sowie die Menge des einzuspritzenden Kraftstoffs abhängig von den erfassten Temperatur-Istwerten des Partikelfilters (8) eingestellt wird, und zwar bei niedriger Partikelfilter-Temperatur auf vergleichsweise hohe Einspritzmengen und bei höherer Partikelfilter-Temperatur auf niedrigere Einspritzmengen.

6. Verfahren nach Anspruch 5, **dadurch gekennzeichnet, dass** der steuerungstechnisch beeinflussbare Beginn der Kraftstoffeinspritzungen bei minimal ca. 5°KW nach OT und maximal bei ca. 120°KW nach OT liegt, der Einstellbereich demnach ca. 115° KW beträgt, in den eine Verschiebung der Einspritzzeitpunkte nach früher oder später und eine Variierung der Kraftstoff-Einspritzmenge möglich ist.

7. Verfahren nach Anspruch 1, **dadurch gekennzeichnet, dass** während einer innerhalb einer Motorbremsphase aktivierten Regenerationsphase der aktuelle Regenerierungszustand des Partikelfilters (8) durch Erfassung von hierfür aussagefähigen Betriebswerten wie dem Abgasgegendruck im Abgasstrang (7) festgestellt wird, und dass eine Regenerierungsphase beendet wird, sobald ein für einen hinreichenden Regenerierungsgrad des Partikelfilters (8) repräsentativer Betriebswert festgestellt wird.

8. Verfahren nach den vorhergehenden Ansprüchen, **dadurch gekennzeichnet, dass** alle Regel- und Steuerungsmaßnahmen - die Regenerierung des Partikelfilters (8) während Motorbremsbetriebsphasen betreffend - von einer rechnergestützt arbeitenden elektronischen Steuereinheit (18) aus erfolgen, die per Programm anhand eingespeicherter Sollwertdaten die ihr signalisierten Betriebs-Istwerte auswertet und in entsprechende Steuerbefehle für die von ihr zu steuernden Organe wie Bremsklappe (19), Bypassventil (21) und Einspritzventile (16) umsetzt.
